# EUROPÄISCHE PATENTSCHRIFT

(11) **EP 1 955 876 B1**
(45) Veröffentlichungstag und Bekanntmachung des Hinweises auf die Patenterteilung: **10.03.2010**
(21) Anmeldenummer: 08001156.2
(22) Anmeldetag: 23.01.2008
(51) Int. Cl.: B60G 17/016, B60G 17/019, B60G 21/055

(54) **Verfahren zum Betrieb eines Aktuators, insbesondere eines elektrischen Aktuators innerhalb einer Stabilisatoranordnung**
Method for operating an actuator, in particular an electric actuator inside a stabiliser device
Procédé destiné à au fonctionnement d'un actionneur, en particulier d'un actionneur électrique dans un dispositif de stabilisateur

(30) Priorität: 07.02.2007 DE 102007005983
(43) Veröffentlichungstag der Anmeldung: 13.08.2008
(73) Patentinhaber: ZF Friedrichshafen AG, 88038 Friedrichshafen (DE)
(72) Erfinder: Ketteler, Karl-Hermann, Dr., 88677 Markdorf (DE); Fuessl, Andreas, 88079 Kressbronn (DE); Schmid, Johannes, Dr., 4111 Walding (AT)

(56) Entgegenhaltungen:
- EP-A- 1 705 038
- EP-A- 1 714 808
- WO-A-2004/089663
- WO-A-2006/134954
- WO-A-2006/135072

## Beschreibung

Die Erfindung betrifft ein Verfahren zum Betrieb eines Aktuators gemäß dem Oberbegriff von Patentanspruch 1.

Aus der EP 1 714 808 A1 ist eine Stabilisatoranordnung mit einem elektrischen Aktuator bekannt, wobei durch eine Regelung des Aktuators einer Wankbewegung des Fahrzeugaufbaus entgegen gewirkt werden soll. Ein Fahrzeugaufbau führt jedoch nicht nur Wankbewegungen aufgrund einer Kurvenfahrt aus, sondern auch bei Geradeausfahrt und einer einseitigen Federungsbewegung eines Rades. Dabei ist zu berücksichtigen, dass sich der Fahrzeugaufbau in der Größenordnung bis zu 1 Hz bewegt, die Frequenz der Federbewegung des Rades jedoch bis ca. 10 Hz betragen kann.

Nach den mathematischen Regeln der Schwingungslehre stellt eine Stabilisatoranordnung mit einem Aktuator ein Ein-Massen-Schwingungssystem mit einer ausgeprägten Resonanzfrequenz dar, wenn die Momentenübertragungskette zwischen Aktuator und Stabilisator einen hohen Wirkungsgrad aufweist. Der Stabilisator bildet die Feder und ein Rotor des Aktuators ist als Masse mit einer Massenträgheit anzusehen. Der Einfluss der Rotormasse wird noch verstärkt, wenn zwischen dem Aktuator und dem Stabilisator ein Getriebe mit gutem Wirkungsgrad verwendet wird. Das Übersetzungsverhältnis des Getriebes geht quadratisch in die Berechnung des Massenträgheitsmoments des Rotors ein. Die Resonanzfrequenz bei bekannten Systemen liegt bei etwa 5 bis 7 Hz und damit in dem Bereich der Schwingungsfrequenz der Räder. Bei einer Steuerung oder Regelung des Aktuators ohne Berücksichtigung dieser Gegebenheiten führt der Aktuator sehr große Stellbewegungen bzw. Stellkräften aus, die auf den Fahrzeugaufbau übertragen und von Fahrzeuginsassen als unkomfortabel empfunden werden.

Eine Lösung des Problems könnte darin liegen ein Getriebe mit kleinem Wirkungsgrad zu verwenden. Durch das Getriebe mit kleinem Wirkungsgrad ist tritt die Resonanzfrequenz nicht auf, wenn die Verlustleistung im Getriebe (Dämpfung) ausreichend groß ist. Nachteil dieser Lösung ist zum einen, dass für die Aktuatorbewegung aktiv entsprechend der geringen hohen Verlustleistung des Getriebes viel Motorleistung notwendig ist, und zum anderen der aktive Stabilisator bei Anregung durch die Fahrbahn überwiegend als passiver Stabilisator wirkt. Es ist also mit einer deutlichen Übertragung von einseitigen Radanregungen auf die gegenüberliegende Seite zu rechnen.

Eine weitere Lösung des Problems könnte darin liegen, dass man die Federrate des Stabilisators vergrößert. Da sich der E-Modul von Stahl nicht signifikant steigern lässt, muss die Federrate durch den Querschnitt des Stabilisators angehoben werden. Eine Querschnittsvergrößerung ist aber häufig mit einem Gewichts- oder Bauraumnachteil verbunden.

Ferner könnte man in Betracht ziehen, das Getriebe am Aktuator wegzulassen und stattdessen einen sehr leistungsstarken Aktuator zu verwenden. Ein leistungsstarker Aktuator ist entweder sehr teuer oder ebenfalls mit Bauraumnachteilen behaftet.

In der DE 103 16 114 A1 wird vorgeschlagen, dass man die von der Fahrbahn hervorgerufenen Signalanteile einfach mit einem Hochpassfilter entfernt. Damit geht aber eine für das Wankverhalten des Fahrzeugaufbaus wichtige Information verloren und kann nicht in die Stabilisatorsteuerung einfließen.

Aus der gattungsbildenden WO 2006135072 ist ein Verfahren zum Betrieb einer verstellbaren Stabilisatoranordnung mit einem Aktuator bekannt. Eine Sensorik erfasst die Bewegung des Fahrzeugaufbaus und Radbewegungen. Aus der Betriebsbewegung des Aktuators wird unter Verwendung eines Bewertungsfaktors ein Beitrag zur Bestimmung des Aktuatormoments generiert.

Die Wo 2004089663 beschreibt ein Verfahren zum Betreiben eines Regelkreises zur aktiven Wankdämpfung eines Fahrzeugs mit einem aktiven Stabilisator. Dabei wird die Wankbewegung des Fahrzeugaufbaus von Sensoren erfasst deren Signale in einem Regelkreis zur Reduzierung der absoluten Wankbeschleunigung verwendet.

Die Aufgabe der vorliegenden Erfindung besteht darin, das Resonanzverhalten der Stabilisatoranordnung so zu verändern, dass der Fahrzeugaufbau im Fahrbetrieb ein komfortables Verhalten zeigt.

Erfindungsgemäß wird die Aufgabe durch die Merkmale des Patentanspruchs 1 gelöst.

Bei einer herkömmlichen Aktuatoransteuerung wird das erforderliche Torsionsmoment von den Anteilen Massenträgheitsmoment des Aktuators, Reibmomente innerhalb der Stabilisatoranordnung und einem Niveauanteil, d. h. momentaner Wankposition, bestimmt. Damit lässt sich eine Wankbewegung des Fahrzeugaufbaus aufgrund einer Kurvenfahrt ausreichend unterdrücken.

Bei jeder einseitigen Federungsbewegung eines Rades führen die Stabilisatorabschnitte zueinander eine Torsionsbewegung aus, die auf den Aktuator übertragen wird. Diese Torsionsbewegung der Stabilisatorabschnitte führt zu einer gegenläufigen Betriebsbewegung des Aktuators. Durch den Bewertungsfaktor wird der Einfluss der Federungsbewegung auf die Gesamtsumme des Aktuatormoments gedämpft. Für einen Fahrzeuginsassen bedeutet dieses Verfahren, dass bei einer einseitigen Einfederungsbewegung eines Fahrzeugrades zwar ein zusätzliches Stützmoment entgegen einer Wankbewegung aufgebaut wird, aber nicht mit einem Momentensprung, so dass ein komfortableres Fahrverhalten erreicht wird.

Mit dem Beitrag des den Differenzwinkel der Radbewegungen an einer Fahrzeugachse repräsentierendes Signals lässt sich die Federrate der Stabilisatorabschnitte rechnerisch durch die Steuerelektronik verändern, ohne dass an den Bauteilen Änderungen durchgeführt werden müssen.

In weiterer vorteilhafter Ausgestaltung wird die Betriebsbewegung als Änderung des Aktuatorwinkels/Zeiteinheit erfasst.

In weiterer vorteilhafter Ausgestaltung steuern der radbezogene Differenzwinkel, der Motorwinkel und die Änderung des Aktuatorwinkels pro Zeiteinheit durch mindestens einen Bewertungsfaktor additive Beiträge zur Bestimmung des Aktuatorsollmoments bei.

Durch die Erfassung der Winkelbewegung des Aktuators sowie dem Differenzwinkel zwischen beiden Rädern stehen Signale zur Verfügung, die in der Bewegungsgleichung eines Torsionsschwingers "Federmoment" und "Dämpfungsmoment" repräsentieren. Durch die Bewertung mit applikationsspezifisch wählbaren Faktoren lässt sich ein Dämfpungsmomentensollwert und Federmomentensollwert ermitteln, die dem Sollwert der Antriebsregelung hinzuaddiert werden.

Es geling dadurch also das Systemverhalten des Torsionsschwingers durch den aktiven Eingriff auf das Motormoment wunschgemäß anzupassen mit dem Ziel die oben aufgeführten Maßnahmen applikationsspezifisch optimal anzupassen.

Die Bewertungsbeiträge für die Betriebsbewegungen und der Federrate sind Festwerte, die z. B. durch Simulation oder durch Fahrversuche ermittelt werden.

Dabei spielt das gewünschte Fahrverhalten, ob betont sportlich oder eher komfortabel, die ausschlaggebende Rolle. Daraus ergibt sich die Möglichkeit, dass der/die Bewertungsfaktor(en) unabhängig voneinander einstellbar ist/sind, z. B. über einen Wählschalter.

Des Weiteren ist vorgesehen, dass eine Rechnereinheit für den Aktuator mit einer Taktfrequenz betrieben wird, die mindestens um den Faktor 5 größer ist als eine maximal vorgesehene Arbeitsfrequenz der Stabilisatoranordnung. Versuche haben gezeigt, dass die Stabilisatoranordnung auch bei einer Arbeitsfrequenz von 40 Hz praktisch ohne Abweichungen den Stellsignalen des Aktuators folgt, d. h. dass das Stellsignal dem Istsignal entspricht. Für das Verfahren ergibt sich die Möglichkeit anstatt einer Regelstrecke eine Steuerstrecke auszuführen und damit zusätzliche Signalvergleiche unterlassen zu können.

Anhand der folgenden Figurenbeschreibung soll die Erfindung näher erläutert werden.

### Es zeigt:

- Fig. 1: Prinzipdarstellung einer Fahrzeugachse mit einer erfindungsgemäßen Stabilisatoranordnung
- Fig. 2: Aktuator der Fig. 1 in Schnittdarstellung
- Fig. 3: Ersatzschaubbild des Verfahrens
- Fig. 4: Resonanzkurve der Stabilisatoranordnung

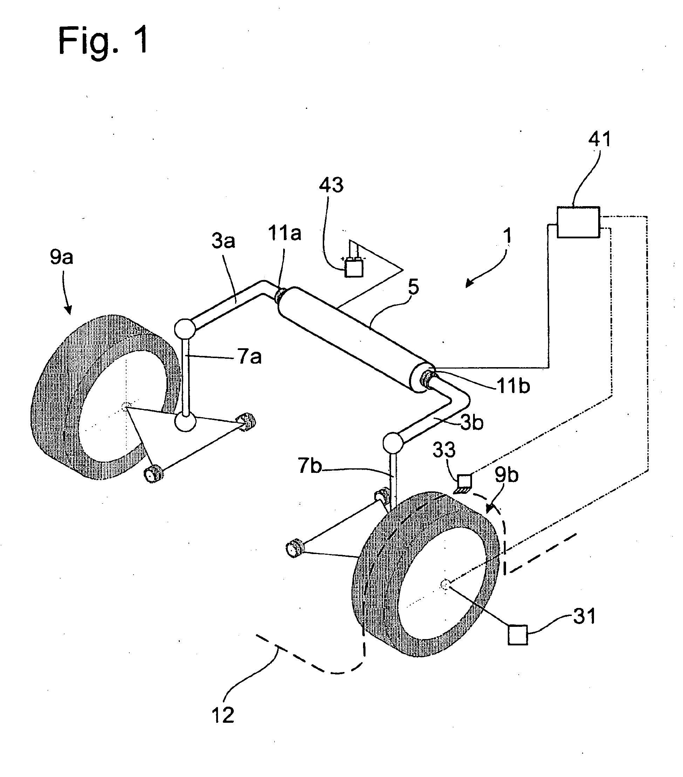

Die Figur 1 zeigt ein Prinzipschaubild einer Stabilisatoranordnung 1, die einen zweigeteilten Stabilisator mit Stabilisatorabschnitten 3a; 3b und einem zwischen den beiden Stabilisatorabschnitten angeordneten Aktuator 5 umfasst. Jeweils ein Stabilisatorabschnitt 3a; 3b ist über eine Pendelstütze 7a; 7b mit einem Fahrzeugrad 9a; 9b verbunden. Zwei Stabilisatorlager 11a; 11b verbinden die Stabilisatoranordnung mit einem Fahrzeugaufbau 12. Bei einer Ein- oder Ausfederungsbewegung eines der Fahrzeugräder 9a; 9b oder einer Wankbewegung des Fahrzeugaufbaus um die Längsachse wird der entsprechende Stabilisatorabschnitt 3a; 3b in Abhängigkeit der Längenverhältnisse auf Torsion beansprucht.

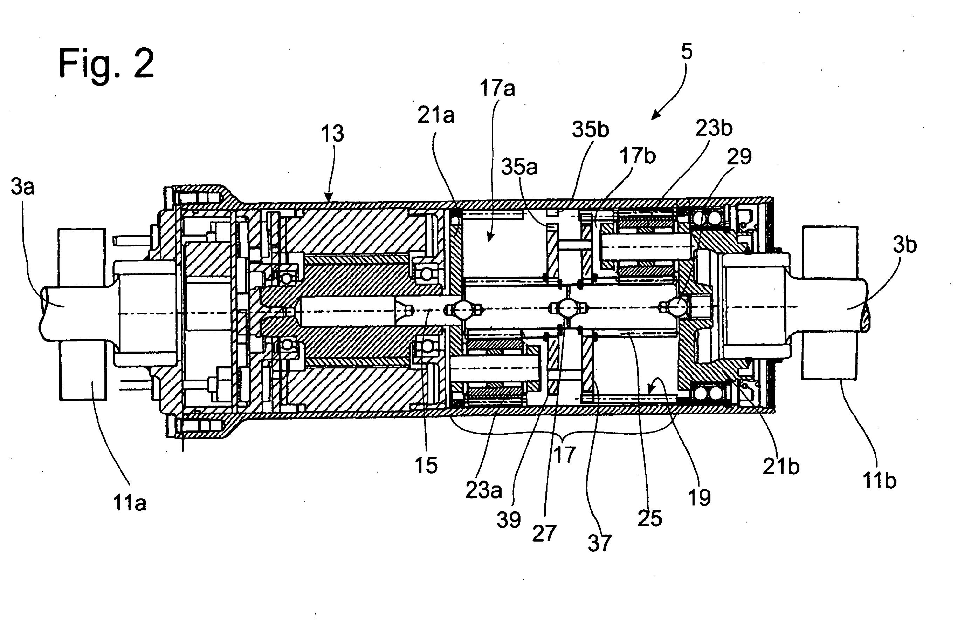

Die Figur 2 beschränkt sich auf einen Längsschnitt durch den Aktautor 5. In einem Gehäuse 13 ist ein elektrischer Schwenkmotor mit einer Rotorwelle 15 zur Verstellung der Stabilisatoranordnung ausgeführt. Der Stabilisatorabschnitt 3a ist fest mit dem Gehäuse 13 des Schwenkmotors verbunden. Zwischen der Rotorwelle 15 und dem Stabilisatorabschnitt 3b ist ein zweistufiges Getriebe angeordnet, in diesem Fall ein Planetengetriebe 17. Die Gehäuseinnenwandung bildet ein Hohlrad 19. Getriebeeingangsseitig greift der Stabilisatorabschnitt 3b an einem Planetenradträger 21b an, dessen Planetenräder 23b wiederum mit einem Sonnenrad 25 als Getriebeausgang im Eingriff stehen. Das Sonnenrad 25 wird von einer Zwischenwelle zwischen der Rotorwelle 15 und dem Planetenradträger 21 gebildet, wobei sich alle drei genannten Bauteil durch Lager 27; 29 relativ in Umfangsrichtung zueinander bewegen können. Eine weitere Getriebestufe 17a mit einem Planetenradträger 21a und Planetenrädern 23a steht mit der Rotorwelle 15 im Eingriff.

Wenn der Schwenkmotor von der Energiezufuhr abgeschaltet ist, dann können sich die Stabilisatorenden abgesehen von Reibungskräften, z. B. in den Lagerstellen und im Getriebe 17, unabhängig voneinander bewegen. Bei einer Bestromung erzeugt der Elektromotor ein angepasstes Gegendrehmoment auf das einwirkende Moment aufgrund einer Anregung einer Fahrbahnoberfläche oder einer Rollbewegung des Fahrzeugaufbaus. Die Größe des Gegenmoments und der zulässige Verdrehwinkel der Stabilisatorabschnitte werden aufgrund von Signalen berechnet, die von einer Sensorik zur Erfassung der Bewegung des Fahrzeugaufbaus zu einer Radbewegung bereitgestellt werden. Die Sensorik kann z. B. Radsensoren 31, einen Fahrzeugaufbausensor 33, aber auch einen Sensor 35a; 35b innerhalb des Schwenkmotors umfassen, der die Verdrehgeschwindigkeit und richtungsabhängig den Verdrehwinkel zwischen den Stabilisatorabschnitten 3a: 3b erfasst. Der Sensor 35a; 35b kann z. B. zwischen der Innenwandung des Gehäuses und je einem der Übertragungszahnrad 37; 39 zwischen den beiden Getriebestufen angeordnet sein.

Die Signale der Sensorik 31 und 33 werden an eine Rechnereinheit 41 weitergeleitet, die aus den Signalen ein Stellmoment des Schwenkmotors bestimmt.

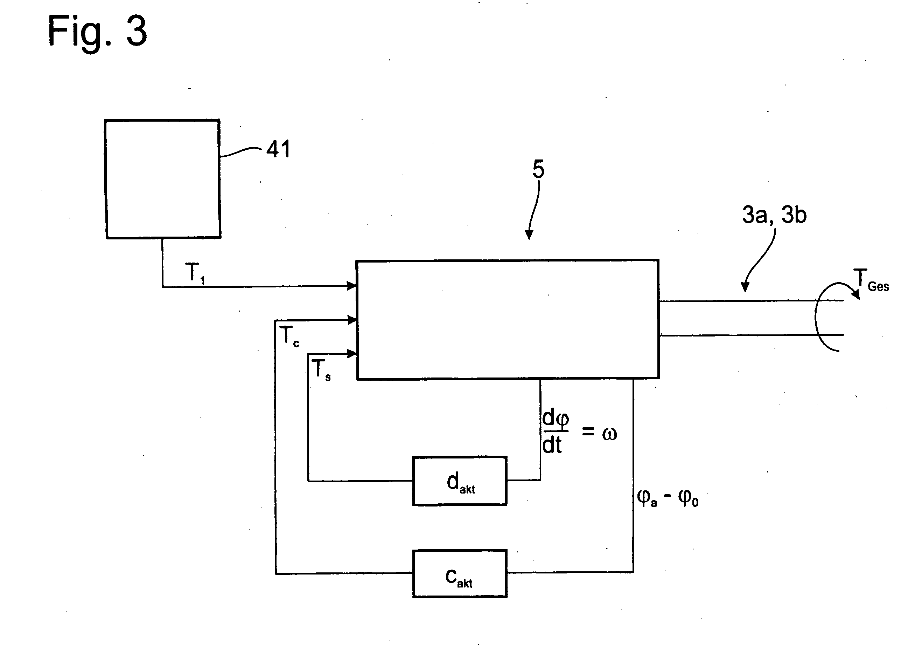

Die Fig. 3 zeigt ein Ersatzschaubild für das erfindungsgemäße Verfahren. Die Rechnereinheit bestimmt Stellgrößen für ein Motormoment Ti, wobei die Stellgröße einen Anteil T_{T} für die Massenträgheit des E-Motors berücksichtigt, z. B. vom Rotor und vom Planetenradgetriebe 17. Des Weiteren enthält die Stellgröße einen Aktuatormomentanteil T_{R} für die innere Reibung des Aktuators und der Stabilisatorabschnitte 3a; 3b. Ein weiterer Anteil Tw von dem aufzubringenden Gegenmoment des Aktuators wird von der Wankbewegung des Fahrzeugaufbaus bestimmt.

Durch Auswertung des Sensors 35a; 35b wird ein Drehwinkelgeschwindigkeits-Signal Ω = dϕ/dt gewonnen, das mit einem Bewertungsfaktor dₐₖₜ. einen weiteren Aktuatormomentanteil Ts bestimmt. Bei einer einseitigen Einfederungsbewegung eines Rades 9a; 9b führt der Aktuator über die Stabilisatorabschnitte 3a; 3b und dem Getriebe 17 eine Betriebsbewegung aus, die praktisch einer Detektion der Straßenoberfläche entspricht. Der Aktuatormomentanteil Ts wirkt einer Wankbewegung des Fahrzeugaufbaus aufgrund einer Einfederungsbewegung entgegen, wobei sich der Bewertungsfaktor dₐₖₜ für das Gesamtsystem dämpfend fungiert. Der Bewertungsfaktor dₐₖₜ ist fahrzeugabhängig und stellt einen Festwert dar, der jedoch z. B. über einen Wahlschalter einstellbar ist, um das Fahrverhalten des Fahrzeugs tendenziell sportlicher oder komfortabler zu gestalten.

Zusätzlich kann der Differenzwinkel Δϕ zwischen einer Auslenkung der Stabilisatorabschnitte beider Räder einer Achse erfasst und ebenfalls mit einem Bewertungsfaktor Cₐₖₜ angepasst werden, um aus dem Produkt des Drehwinkels multipliziert mit der Federrate c einen Aktuatormomentanteil Tc zu erhalten, der für das Gesamtsystem praktisch eine Korrektur der Federrate der Stabilisatorabschnitte darstellt, ohne jedoch bauliche Veränderungen an den Stabilisatorabschnitten vornehmen zu müssen.

Der Differenzwinkel Δϕ lässt z. B. durch die Sensoren 35a; 35b feststellen, so dass für das Verfahren zum Betrieb der Stabilisatoranordnung sowohl für die Führungsgröße T₁ wie auch für die optimierte Berücksichtigung der Radbewegung als Störgröße durch die Aktuatormomente Ts und Tc dieselbe Sensorik 35a; 35b verwendet werden kann.

Auch der Bewertungsfaktor cₐₖₜ kann einstellbar sein bzw. über einen Wählmodus mit dem Bewertungsfaktor dₐₖₜ eine gewünschte Fahrwerksabstimmung herbeiführen. Die einseitige Einfederungsbewegung eines Rades ist als Störgröße anzusehen, die eine deutliche höhere Frequenz aufweist als die Wankbewegung als Störgröße. Durch die getrennte Betrachtung der Aktuatormomentanteile T₁ und den Aktuatormomentanteilen Ts und T_{c} kann ein vergleichsweise einfacher Algorithmus innerhalb der Rechnereinheit 41 verwendet werden.

Die Rechnereinheit 41 für den Aktuator 5 wird mit einer Taktfrequenz betrieben, die mindestens um den Faktor 5 größer ist als eine maximal vorgegebene Arbeitsfrequenz der Stabilisatoranordnung. Mit der leistungsfähigen Rechnereinheit kann auf eine Signalrückführung und damit auf eine Regelstrecke verzichtet werden, da der Aktuator 5 in einem weiten Bereich fehlerfrei den Stellbefehlen der Rechnereinheit 41 folgt.

Optional kann der elektrische Schwenkmotor durch die Ausnutzung der Anregungen durch die Fahrbahnoberfläche oder der Rollbewegung des Fahrzeugaufbaus auch als Generator verwendet werden, wobei eine Batterie 43 als Speicher dient (Fig. 1).

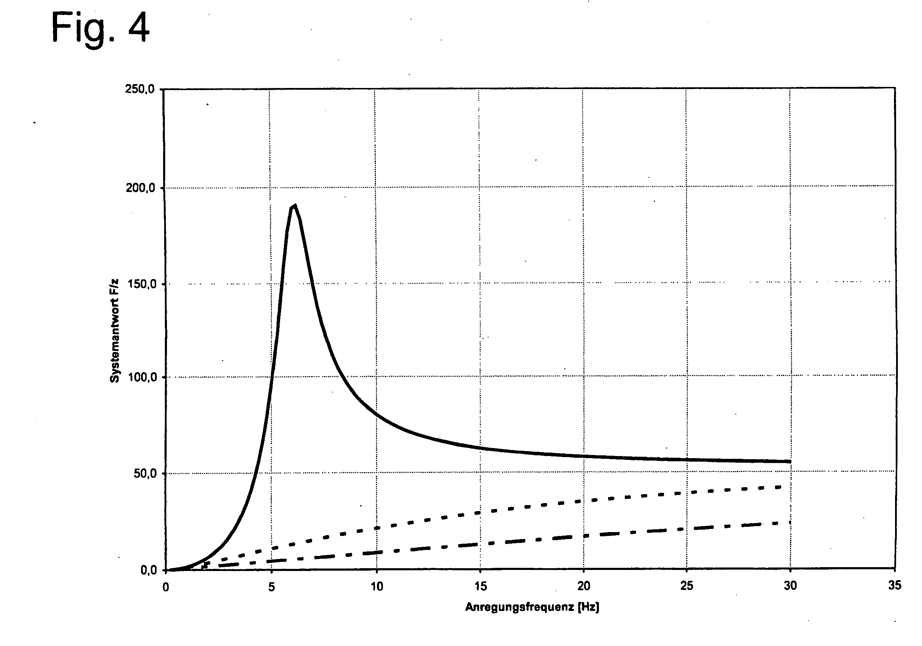

Die Figur 4 zeigt die Wirkung des Verfahrens bei einem realen System. Auf der Abszisse ist die Anregungsfrequenz und auf der Ordinate die Systemantwort ablesbar. Bei einer konventionellen Auslegung der Stabilisatoranordnung und des Betriebsverfahrens stellt sich im Bereich zwischen 5 und 10 Hz ein ausgeprägtes Resonanzverhalten ein, das insbesondere deshalb so nachteilig ist, da die Fahrzeugräder gerade dieser Anregungsfrequenz ausgesetzt sind.

Bei der gestrichelten und der strich-punktierten Kennlinie kommt das erfindungsgemäße Verfahren zur Anwendung, bei dem eine degressive Kennlinie erreicht wird.

## Patentansprüche

1. Verfahren zum Betrieb einer verstellbaren Stabilisatoranordnung (1), umfassend einen Aktuator (5), der in Abhängigkeit einer Führungsgröße Stabilisatorabschnitte (3a; 3b) mit einem Aktuatormoment beaufschlägt, um eine Wankbewegung eines Fahrzeugaufbaus (12) zu beeinflussen, wobei mittels einer Sensorik (31; 33) die Bewegung des Fahrzeugaufbaus (12) und einer Sensorik (35a; 35b) Radbewegungen erfasst werden und eine Betriebsbewegung des Aktuators (5) einen Beitrag (Ts) zur Bestimmung des Aktuatormoments (T_{Ges}) liefert, indem Istsignale (Ω) des Aktuators (5) erfasst und mit mindestens einem Bewertungsfaktor (dₐₖₜ) versehen werden
**dadurch gekennzeichnet,**
**dass** ein den Differenzwinkel (Δϕ = ϕ_{rechts} - ϕₗᵢₙₖₛ) der Radbewegungen an einer Fahrzeugachse repräsentierendes Signal einen Beitrag (T_{c}) zur Bestimmung des Aktuatormoments (T_{Ges}) liefert und der Differenzwinkel (Δϕ) von der Sensorik (35a; 35b) funktional zwischen den sich zueinander verdrehbaren Stabilisatorabschnitten (3a; 3b) erfasst wird, wobei die Sensorik (35a; 35b) auch zur Optimierung des Störgrößenverhaltens verwendet wird.

2. Verfahren nach Anspruch 1,
**dadurch gekennzeichnet,**
**dass** die Betriebsbewegung als Änderung der Motonivinkel/pro Zeiteinheit erfasst wird.

3. Verfahren nach Anspruch 1,
**dadurch gekennzeichnet,**
**dass** der radbezogene Differenzwinkel (Δϕ), der Motorwinkel und die Änderung des Aktuatorwinkels pro Zeiteinheit durch mindestens einen Bewertungsfaktoren (dₐₖₜ); (cₐₖₜ) additive Beiträge zur Bestimmung des Aktuatorsollmoments beisteuern.

4. Verfahren nach den Ansprüchen 1 oder 3,
**dadurch gekennzeichnet,**
**dass** die Bewertungsfaktoren (dₐₖₜ; cₐₖₜ) unabhängig von einander einstellbar sind.

5. Verfahren nach einem der Ansprüche 1 bis 4,
**dadurch gekennzeichnet,**
**dass** eine Rechnereinheit (41) für den Aktuator (5) mit einer Taktfrequenz betrieben wird, die mindestens um den Faktor 5 größer ist als eine maximal vorgesehene Arbeitsfrequenz der Stabilisatoranordnung (1).

## Claims

1. Method for operating an adjustable stabilizer arrangement (1), comprising an actuator (5) which applies an actuator torque to stabilizer sections (3a; 3b) as a function of a reference variable in order to influence a rolling movement of a vehicle body (12), wherein the movement of the vehicle body (12) is sensed by means of a sensor system (31; 33), and wheel movements are sensed by means of a sensor system (35a; 35b), and an operational movement of the actuator (5) makes a contribution (Ts) to the determination of the actuator torque (T_{Ges}) in that actual signals (Ω) of the actuator (5) are sensed and provided with at least one weighting factor (d_{act}),
**characterized**
**in that** a signal which represents the differential angle (Δϕ = ϕ_{right} - ϕ_{left}) of the wheel movements at a vehicle axle makes a contribution (T_{c}) to the determination of the actuator torque (T_{Ges}), and the differential angle (Δϕ) is functionally sensed by the sensor system (35a; 35b) between the stabilizer sections (3a; 3b) which can be rotated with respect to one another, wherein the sensor system (35a; 35b) is also used to optimize the interference variable behaviour.

2. Method according to Claim 1,
**characterized**
**in that** the operational movement is sensed as a change in the engine angle per time unit.

3. Method according to Claim 1,
**characterized**
**in that** the wheel-related differential angle (Δϕ), the engine angle and the change in the actuator angle per time unit make, through at least one weighting factor (d_{act}); (c_{act}), additive contributions to the determination of the actuator setpoint torque.

4. Method according to Claim 1 or 3,
**characterized**
**in that** the weighting factors (d_{act}; c_{act}) can be set independently of one another.

5. Method according to one of Claims 1 to 4,
**characterized**
**in that** a computing unit (41) for the actuator (5) is operated with a clocking frequency which is higher than a maximum provided working frequency of the stabilizer arrangement (1) by at least a factor of 5.

## Revendications

1. Procédé de fonctionnement d'un arrangement stabilisateur (1) positionnable, comprenant un actionneur (5) qui soumet des sections de stabilisateur (3a ; 3b) à un moment d'actionneur en fonction d'une grandeur de référence afin d'influencer un mouvement de roulis d'une carrosserie de véhicule (12), le mouvement de la carrosserie de véhicule (12) étant détecté au moyen d'un dispositif de détection (31 ; 33) et les mouvements des roues au moyen d'un dispositif de détection (35a ; 35b) et un mouvement opérationnel de l'actionneur (5) délivrant un élément contributif (Ts) pour la détermination du moment d'actionneur (T_{Ges}) en détectant les signaux réels (Ω) de l'actionneur (5) et en leur attribuant au moins un facteur d'évaluation (dₐₖₜ), **caractérisé en ce qu'**un signal qui représente l'angle différentiel (Δϕ = ϕ_{rechts} - ϕₗᵢₙₖₛ) des mouvements des roues sur un essieu du véhicule fournit un élément contributif (T_{c}) pour la détermination du moment d'actionneur (T_{Ges}) et l'angle différentiel (Δϕ) est détecté par le dispositif de détection (35a ; 35b) de manière fonctionnelle entre les sections de stabilisateur (3a ; 3b) qui peuvent tourner l'une par rapport à l'autre, le dispositif de détection (35a ; 35b) étant également utilisé pour optimiser la réaction aux grandeurs de perturbation.

2. Procédé selon la revendication 1, **caractérisé en ce que** le mouvement opérationnel est détecté sous la forme d'une variation de l'angle du moteur par unité de temps.

3. Procédé selon la revendication 1, **caractérisé en ce que** l'angle différentiel (Δϕ) entre les roues, l'angle du moteur et la variation de l'angle de l'actionneur par unité de temps apportent des éléments contributifs additifs pour la détermination du moment d'actionneur de consigne sous la forme d'au moins un facteur d'évaluation (dₐₖₜ) ; (cₐₖₜ).

4. Procédé selon les revendications 1 ou 3,
**caractérisé en ce que** les facteurs d'évaluation (dₐₖₜ ; cₐₖₜ) sont réglables indépendamment l'un de l'autre.

5. Procédé selon l'une des revendications 1 à 4, **caractérisé en ce qu'**une unité de calcul (41) pour l'actionneur (5) fonctionne à une fréquence d'horloge qui est supérieure d'au moins un facteur 5 à une fréquence de travail maximale prévue de l'arrangement stabilisateur (1).
